# EUROPEAN PATENT APPLICATION

(11) **EP 3 771 739 A1**
(43) Date of publication of application: **03.02.2021**
(21) Application number: 19189372.6
(22) Date of filing: 31.07.2019
(51) Int. Cl.: C10L 5/44, C10L 9/08

(54) **METHOD AND AN APPARATUS FOR DRY PROCESSING HOT COAL AND COKE**

(71) Applicant: CEG Technology UK Limited, Enderby, Leicestershire LE19 1SD (GB)
(72) Inventor: Balon Jr., Thomas Hamilton, Pembroke, NH New Hampshire 03275 (US); Butler, Neil Alan, Riddings Alfreton, DE554EF (GB); Scheepers, Peter Franciscus Johannes Maria, 6027 NC Soerendonk (NL)
(74) Representative: Hoyng Rokh Monegier LLP

(57) **Abstract**

An apparatus for handling hot coal is provided, comprising
- a cooling structure arranged to receive coal from a process chamber and to cool the coal in an atmosphere impeding ignition; and
- a pneumatic conveyor system arranged to move coal by air pressure;
wherein the cooling structure is configured to cool the coal to a surface temperature allowing the pneumatic conveyor system to convey the coal across a predetermined distance without the coal igniting.

## Description

### FIELD OF THE INVENTION

The invention generally refers to a method and an apparatus for dry processing hot coal and coke.

### BACKGROUND OF THE INVENTION

A number of processes increase carbon density of organic- or fossil fuel-based carbonaceous materials usually under the influence of heat.

Traditionally, coal is produced by heating wood in the absence of oxygen. More recently, various processes involving pyrolytic cracking have been developed which increase carbon density of such organic- or fossil fuel-based carbonaceous materials, generally biomass.

Torrefaction for example has been found to transform biomass into biocoal or biochar, a solid with low moisture content and an amount, particularly mass percentage, of carbon increased as compared to the initial biomass. Typically, in torrefaction biomass is exposed to temperatures anywhere between 200 °C and 350 °C for a residence time anywhere between 10 minutes and 120 minutes. Biomass usually means wood chips, but a large variety of biomass is conceivable. Biocoal produced by torrefaction has been found to have less weight, particularly less oxygen weight, and a higher energy density as regards volume and mass than the initial biomass. Biocoal from torrefaction can be used much like traditional fossil coal for energy generation in conventional coal powered plants.

The resulting biocoal should principally cool down to a temperature below its ignition temperature before being exposed to ambient air to avoid combustion. While traditional charcoal piles and kilns were left to cool down, this is not an option for modern processing as it would substantially limit throughput. Accordingly, the biocoal is quenched, that essentially means cooled, immediately after production to bring the biocoal into a state safe to transport and store.

Conventionally, biocoal can be cooled by wet quenching, where biocoal is watered either prior to exiting the process chamber or immediately thereafter. Wet quenching provides a fast way of cooling down the biocoal and the water remaining with the biocoal will prevent to some extent that the coal can heat up again and possibly ignite. However, the additional water also increases the weight of the biocoal while the volumetric energy density does not change, that is, transporting wet quenched biocoal is less efficient than it would be to transport dry biocoal. Apart from that, the steam generated by wet quenching contains pollutants and should be treated accordingly before being left into the environment.

For coke, a dry quenching process has been developed where the hot coke is filled into a bulk storage tower containing an atmosphere of inert gas. The inert gas is flushed through the tower from below, rises while heating up and cycled back through a cooling structure. The bulk storage tower is filled from a bucket discharging through the top of the bulk storage tower.

WO 2015/084162 A1 describes that a modified dryer utilizing thermal conduction to torrefy the biomass in a vibratory reactor in which a heated solid unperforated plate is sealed in the reactor to separate the biomass above from the gas used to heat the plate below. Also, syngas evolved from the process is utilized to power a gas engine, the exhaust output of which is recirculated to heat the reactor plate. When the gas engine is coupled to an electric generator, waste energy is recovered for use in other parts of the plant or exported elsewhere.

### SUMMARY

While the invention is defined in the independent claims, further aspects of the invention are set forth in the dependent claims, the drawing and the following description.

### BRIEF DESCRIPTION OF THE FIGURES

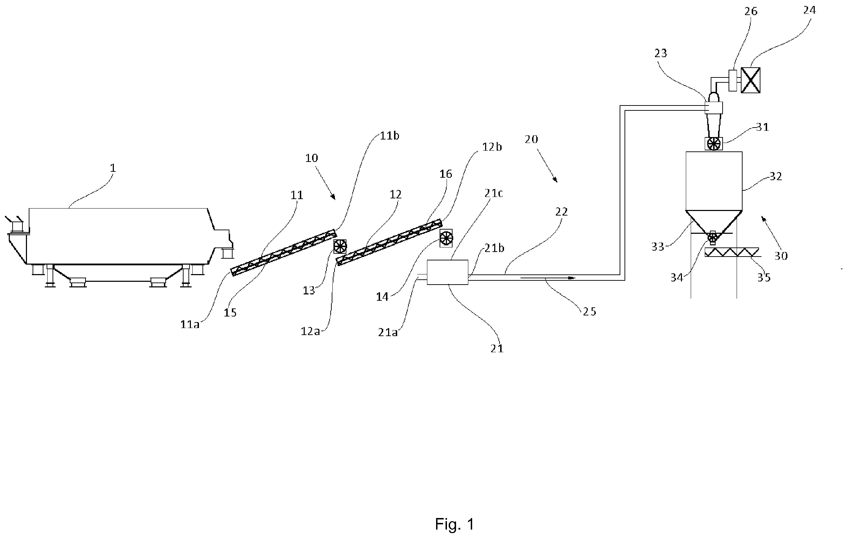

Fig. 1 is a schematic illustration showing a processing apparatus according to an embodiment of the invention.

### DESCRIPTION OF THE PREFERRED EMBODIMENTS

Fig. 1 shows a handling apparatus for coal comprising a cooling structure 10, a pneumatic conveyor system 20 and a bulk storage 30. Before explaining the handling apparatus in detail, some general aspects of the invention will be discussed.

According to an aspect, an apparatus for handling hot coal is provided, comprising
- a cooling structure arranged to receive coal from a process chamber and to cool the coal in an atmosphere impeding ignition; and
- a pneumatic conveyor system arranged to move coal by air pressure;
wherein the cooling structure is configured to cool the coal to a surface temperature allowing the pneumatic conveyor system to convey the coal across a predetermined distance without the coal igniting.

When biomass is processed to increase carbon density, the resulting coal has a temperature above its ignition temperature when it exits the process chamber. To avoid that the coal ignites, it is principally possible either to avoid contact with oxygen or a different oxidizing agent, or to cool the coal below an ignition temperature. It has now been realized that ignition can already be avoided if the portion of the coal making contact with oxygen is below ignition temperature. In such condition the coal can also be handled in an oxygen containing environment, such as ambient air, as long as the surface temperature does not rise above ignition temperature. This in turn allows transporting coal in a pneumatic conveyor system, if the transport takes only as long as the coal surface temperature remains below ignition temperature. In this regard a surface temperature refers to the temperature at the surface of individual integral pieces of coal. Please note that a transport length a duration can be increased if the coal is cooled down further.

In some embodiments a main fraction of the biomass particles, particularly 75% by weight of the biomass particles, has a cross-section of between 3 mm and 16 mm. In further embodiments particles smaller than a cross-section of 3 mm make up less than 12% by weight of the biomass, and particles with a cross-section larger than 16 mm make up less than 3% of the biomass. It has been found that this size provides a good compromise between particles large enough to maintain the low surface temperature sufficiently long while being easy to drag with the airflow in a pneumatic conveyor system.

Wet quenched coal would have a too high mass density to allow pneumatic conveying. In some embodiments it is not required to suppress any combustion of the coal, as it might be enough if a large share of the coal can be handled without combustion. Accordingly, it might not be necessary to prevent any oxygen in the cooling structure, and an atmosphere impeding ignition might be an atmosphere having substantially reduced levels of oxygen. Likewise, in some embodiments it is tolerable if a small share of the coal ignites during conveying in ambient air.

In some embodiments the apparatus further comprises a gas lock arranged to allow coal to pass from the cooling structure into the pneumatic conveyor system and to impede communicating fluid exchange between the cooling structure and the pneumatic conveyor system, the gas lock preferably being a second rotary airlock.

In some embodiments the gas lock not only prevents that air enters the cooling structure, the gas lock also prevents that the pneumatic conveyor system sucks in any other substance than ambient air from its specific inlet in considerable quantities. This also prevents that the airflow entering the pneumatic conveyor system is deviated and thus avoids dead space accumulating unconveyed coal. Generally avoiding dead space where coal could potentially accumulate also avoids that coal stays in the pneumatic conveyor system longer than intended, and in turn avoids that coal is left in the ambient air atmosphere of the pneumatic conveyor system while heating up above its ignition temperature.

In some embodiments the apparatus further comprises at least one screw conveyor arranged to move coal through the cooling structure. The screw conveyor not only conveys the coal through the cooling structure, but also mixes the coal and causes different portions of the coal to contact an inside wall of the cooling structure. This in turn enables relatively even cooling of the coal while moving through the cooling structure.

In some embodiments the cooling structure comprises a cooling outlet and the pneumatic conveyor system comprises a conveyor inlet wherein the cooling outlet is arranged above the conveyor inlet such that gravity causes coal to drop from the cooling outlet into the conveyor inlet, the conveyor inlet preferably being an inlet chute. Having the coal entering the inlet chute from above allows arranging a straight airflow to convey the coal and does not require any specific element in the airflow to move the coal therein.

In some embodiments the cooling structure comprises a first cooling chamber in fluid communication with the process chamber and a second cooling chamber arranged to receive coal from the first cooling chamber, wherein communicating fluid exchange between the second cooling chamber and the first cooling chamber as well as the process chamber is impeded. In some embodiments the first and second cooling chambers are liquid cooled.

In that regard impeding primarily is to be understood as substantially preventing, though it might be permissible that communicating fluid exchange in minimal quantities takes place.

In some embodiments a first gas lock is arranged between the first cooling chamber and the second cooling chamber, the first gas lock preferably being a first rotary airlock.

In some embodiments the pneumatic conveyor system comprises a conveying channel configured to have coal conveyed along, and the pneumatic conveyor system further comprises a fan configured to move air through the conveying channel, the fan being arranged adjacent to an end of the conveying channel. In alternative embodiments the fan is arranged at the beginning of the pneumatic conveyor system with the coal entering the pneumatic conveyor system between the fan and most or all of the conveying channel.

In some embodiments the apparatus further comprises a bulk storage arranged to receive the coal from the pneumatic conveyor system and to cool the coal, preferably in an atmosphere impeding combustion.

In some embodiments the pneumatic conveyor system further comprises a separator configured to discharge the coal into the bulk storage, the separator preferably being a cyclone separator.

According to a further aspect, a method for handling hot coal comprises
- receiving coal from a process chamber and cooling the coal in an atmosphere impeding ignition; and
- conveying the coal by air pressure;
wherein the coal is cooled to a surface temperature allowing conveying the coal by air pressure across a predetermined distance without the coal igniting.

In some embodiments the method further comprises conveying the coal by air pressure and then cooling the coal in an atmosphere impeding ignition until remaining thermal energy is insufficient to ignite the coal in an atmosphere containing oxygen.

In some embodiments the method further comprises impeding fluid communication between the atmosphere impeding ignition and the air for conveying the coal.

In some embodiments the method further comprises processing biomass to coal in the process chamber, wherein a main fraction of biomass particles, particularly 75% by weight of the biomass particles, preferably has a cross-section of between 3 mm and 16 mm.

In some embodiments particles smaller than a cross-section of 3 mm make up less than 12% by weight of the biomass, and particles with a cross-section larger than 16 mm make up less than 3% of the biomass.

In some embodiments the method further comprises shredding biomass, particularly wood, to receive a cross-section of between 3 mm and 16 mm for a main fraction of biomass particles.

Coming back to Fig. 1 the cooling structure according to the embodiment is arranged to receive coal from a process chamber 1. In various embodiments the process chamber is arranged to generally increase carbon density of organic- or fossil fuel-based carbonaceous materials. To that end a number of techniques are known, usually they include heat exposure of the carbonaceous material. In various embodiments the carbonaceous material undergoes a pyrolysis process. In some embodiments the carbonaceous material undergoes a torrefaction process such as the one described in WO 2015/084162 A1. In various embodiments the carbonaceous material enters the process chamber as biomass, such as wood or grass.

Once the carbonaceous material is turned into a predetermined grade of coal, that is, the carbonaceous material has the predetermined mass energy density, the coal usually has a temperature above its ignition temperature. Thus, before exposing the coal to air, it needs to be cooled. In the embodiment, the carbonaceous material is biomass such that the resulting coal will be referred to as biocoal in the following. The biocoal thus passes from the process chamber 1 to the cooling structure 10. In the cooling structure 10 the biocoal is cooled such that torrefaction is stopped and the biocoal has consistent characteristics once exiting the cooling chamber 10. In various embodiments the cooling structure 10 comprises a cooling element promoting a temperature decrease of the biocoal. In various embodiments the cooling element comprises a cooling liquid circulation structure for water or thermo oil. In various embodiments the cooling element comprises at least one channel allowing circulation of a cooling fluid adjacent to an inner surface of the cooling structure 10.

In various embodiments the interior of the process chamber 1 and at least a part of the interior of the cooling structure 10 are in fluid communication. In various embodiments the cooling structure 10 comprises a first cooling chamber 11 and a second cooling chamber 12. In various embodiments the biocoal passes from the process chamber 1 to the first cooling chamber 11 and from the first cooling chamber 11 to the second cooling chamber 12. In various embodiments the process chamber 1 and the first cooling chamber 11 are in fluid communication and fluid exchange between the process chamber and the second cooling chamber 12 is impeded. Accordingly, while the biocoal undergoes a cooling process in the first cooling chamber 11 sharing the atmosphere with the process chamber 1, the biocoal cools down further in the second cooling chamber 16 in an atmosphere separate from the process chamber 1.

In various embodiments the cooling structure 10 comprises a first airlock 13. The first airlock 13 is arranged between the first cooling chamber 11 and the second cooling chamber 12, such that biocoal passes from the first cooling chamber 11 through the first airlock 13 into the second cooling chamber 12. The first airlock 13 is configured to allow coal to pass while impeding a gas or liquid exchange between the first cooling chamber 11 and the second cooling chamber 12. That is, only minimal amounts of gas pass from the first cooling chamber 11 into the second cooling chamber 12 or back. In various embodiments the first airlock 13 is a rotary airlock arranged much like a revolving door, that is with at least three panels arranged on a common rotary shaft and at least two panels at any point in time sealing against opposite inside walls of cylinder sections such that fluid communication through the airlock is permanently prevented or reduced.

In various embodiments at least in one of the first and second cooling chambers 11, 12 comprise a purging arrangement dispensing an inert gas into the respective at least one of the first and second cooling chambers 11, 12. This reduces oxygen exposure and impedes that the biocoal ignites. The inert gas cools down the biocoal in the respective cooling chamber 15, 16. In various embodiments the inert gas is nitrogen or carbon dioxide.

In various embodiments at least one of the first and second cooling chambers 11, 12 comprise a conveying element 15, 16. In some embodiments, the first cooling chamber 11 comprises a first conveying element 15 arranged to convey the coal from a first cooling inlet 11a of the first cooling chamber 11 to a first cooling outlet 11b of the first cooling chamber 11. In some embodiments, the second cooling chamber 12 comprises a second conveying element 16 arranged to convey the coal from a second cooling inlet 12a of the second cooling chamber 12 to a second cooling outlet 12b of the second cooling chamber 12. In various embodiments the conveying elements are first and second conveying screws 15, 16 or a chain conveyors. In various embodiments the conveying screws 15, 16 in the respective first and second cooling chambers 11, 12 permanently move and mix the biocoal such that different portions of the biocoal are in contact with the inner surface of the respective cooling chamber 11, 12. Where the inner surface is cooled, particularly by a cooling element explained further above, the biocoal dissipates heat and cools down. In some embodiments at least one of the first and second screws 15, 16 has a shaft containing a passage for cooling liquid circulation.

In various embodiments the first cooling outlet 11b is arranged above the second cooling inlet 12a, such that gravity causes coal to drop from the first cooling outlet 11b into the second cooling inlet 12a. In various embodiment the first airlock 13 is arranged between the first cooling outlet 11b and the second cooling inlet 12a. This causes the biocoal to move through the first airlock only under the influence of gravity. In various embodiments the first cooling chamber 11 is sloped such that the first cooling inlet 11a is arranged essentially on the same height over ground as the second cooling inlet 12a.

In various embodiments the first and second cooling chambers 11, 12 are arranged to cool down at least the surface of the bits of the biocoal coming from the process chamber 1 to a temperature below ignition temperature of the biocoal. The inventors have realized that by cooling down the surface of the biocoal, the biocoal can be exposed to air without igniting at least for a specific amount of time. The specific amount of time may be enough to convey the biocoal in an atmosphere of ambient air.

In various embodiments the specific amount of time is determined by the size of the biocoal, as the temperature profile of a bit of biocoal after cooling is heterogenous, where the inside or center might be much hotter and even above the ignition temperature of the biocoal, while the surface of the biocoal is below ignition temperature. Once the cooling process in the cooling structure 10 is stopped, the temperature profile in the biocoal will tend to balance in a way that not only the center of the biocoal cools down, but also that the surface heats up. Cooling is stopped about the time the biocoal is discharged from the cooling structure 10. The biocoal surface might then heat up again above an ignition temperature. As the surface has contact with air, it will easily ignite once above the ignition temperature. Thus, the biocoal can only safely be transported in an atmosphere of ambient air without igniting as long as the surface temperature is below the ignition temperature of the biocoal.

In various embodiments smaller biocoal particles have a shorter distance between their warmer center and their surface, such that the surface temperature will rise above an ignition temperature earlier than it is the case for larger biocoal particles. Accordingly, smaller particles of biocoal, e.g. those produced from saw dust, should be conveyed in a relatively short time, while larger particles can be conveyed in a comparably longer time. For a given cooling structure this in turn determines the transport distance and/or the transport velocity through ambient air to an arrangement for safely storing the biocoal without igniting. For a given transport distance and/or transport velocity this determines the cooling requirements prior to transport. Please note that transport distance, transport velocity and/or cooling requirements in various embodiments are coordinated to safely transport the biocoal to a safe storage.

However, fine particles having their surface just below ignition temperature cannot be exposed to ambient air for extended periods of time without igniting. Still, larger particles increase abrasion in the pneumatic conveyor system 20 and impede an even heat transfer.

In various embodiments the size of the biomass particles, particularly woodchips, is chosen according to standard designation P16A as defined in Alakangas, E. European standard (EN 14961) for wood chips and hog fuel, Forest Bioenergy 2010, 31 st August - 3rd September 2010, Book of proceedings, FINBIO Publications 47, p. 329 - 340. That is, a main fraction of the biomass particles, particularly 75% by weight of the biomass particles, has a cross-section of between 3 mm and 16 mm. In further embodiments particles smaller than a cross-section of 3 mm make up less than 12% by weight of the biomass, and particles with a cross-section larger than 16 mm make up less than 3% of the biomass.

The size of the biocoal is substantially determined by the size of the biomass particles. In various embodiments it is arranged that a bulk of the biocoal does not exceed a certain size. In various embodiments the biomass is shredded prior to entering the process chamber 1. Shredding prior to processing promotes processing inside the process chamber 1 and principally allows for swift cooling.

In various embodiments the pneumatic conveyor system 20 comprises an inlet chute 21, a conveying channel 22 and a fan 24. The pneumatic conveyor system 20 is arranged to create an airflow strong enough to carry at least parts of the biocoal across some distance through the conveying channel 22. In various embodiments the pneumatic conveyor system 20 is arranged to convey biocoal from the cooling structure 10 to the bulk storage 30.

The inlet chute 21 is arranged to receive the biocoal from the cooling structure 10. In various embodiments the cooling structure 10 comprises a second airlock 14 and discharges biocoal through the second airlock 14 into the inlet chute 21. In various embodiments the second cooling outlet 12b is arranged above the inlet chute 21 such that gravity causes the biocoal to move from the second cooling outlet 12b into the inlet chute 21. In various embodiments the second airlock 14 is arranged between the second cooling outlet 12b and the inlet chute 21. The second airlock 14 is arranged to allow biocoal to pass from the second cooling chamber 12 into the inlet chute 21 of the pneumatic conveyor system 20 and to impede communicating fluid exchange between the second cooling chamber 12 and the pneumatic conveyor system 20 as well as ambient air.

In various embodiments the inlet chute 21 is box shaped with a top opening 21c to receive the biocoal, an airflow outlet 21b opening towards the conveying channel 22 and an airflow inlet 21a arranged opposite to the airflow outlet 21b and allowing ambient air to enter the inlet chute 21 and the conveying channel 22. Biocoal disposed in the inlet chute 21 is dragged with the airflow 25 and conveyed through the conveying channel 22 towards the fan 24. In various embodiments the top opening 21c is arranged such that the biocoal is disposed perpendicularly into the airflow 25. Particularly, the airflow inlet 21a and the airflow outlet 21b are arranged at about the same height and facing each other, such that biocoal entering the inlet chute 21 through the top opening 21c drops into the airflow 25 from above. In some embodiments the inlet chute 21 has no other inlet or outlet structure than the airflow inlet 21a, the airflow outlet 21b and the top opening 21c, such that air can only enter the conveying channel 22 from the airflow inlet 21a.

In various embodiments the fan 24 is configured to create an airflow 25 through the pneumatic conveyor system 20, particularly through the conveying channel 21. In various embodiments the inlet chute 21 is arranged at the beginning and the fan 24 is arranged adjacent to an end of the conveying channel 21. The fan 24 creates a pressure gradient across the conveying channel 22 with ambient pressure at the beginning, particularly at the inlet chute 21, and the lowest pressure immediately in front of the fan 24. The fan 24 is configured to supply enough pressure drop to account for the length, diameter and structure of the conveying channel 22, for the pressure drop across the separator 23 and the filter 26. In various embodiments the fan 24 is configured to account for the time the surface temperature of the biocoal is below the ignition temperature of the biocoal once cooling is stopped. Please note that in the airflow 25 the biocoal also cools at least initially while the velocity of the airflow 25 is different from the velocity of the biocoal.

In various embodiments the conveying channel 22 is arranged with a separator 23. The separator 23 is arranged to remove solid particles from the airflow 25 conveyed through the conveying channel 22. In various embodiments the separator 23 is arranged to remove solid particles from the airflow 25 without using a filter. In some embodiments the separator 23 comprises a cyclone separator operating through vortex separation and/or a baffle assembly forcing the airflow 25 to take sudden changes of direction thus forcing solid particles not following the changes of direction to settle. The separator 23 is arranged to guide the biocoal into the bulk storage 30 and to allow the airflow 25 to pass towards the fan 24. The fan 24 only experiences reduced amounts of biocoal in the airflow 25 compared to the airflow 25 before passing the separator 23. In various embodiments the conveying channel 22 is arranged with a filter 26 between the separator 23 and the fan 24. The filter 26 is arranged to hold back particles from the airflow 25 that passed the separator 23 with the airflow 25. The filter 26 particularly filters solid particles the separator 23 did not guide into the bulk storage 30, particularly because the solid particles are small.

The bulk storage 30 is arranged to further cool the biocoal after conveying. The bulk storage 30 stores the biocoal at least until the remaining heat is insufficient to ignite the biocoal. In various embodiments the bulk storage comprises a container vessel 32. In various embodiments the bulk storage contains an inert gas impeding air exposure of the biocoal. With too little air, the biocoal cannot ignite even if the temperature is high.

In various embodiments the container vessel 32 is filled with nitrogen. In various embodiments the nitrogen is fed into the container vessel 32 from a lower portion of the container vessel 32 and rises to drive out any residual air or oxygen compounds contained in the container vessel 32 from before operation of the plant or leaking in from the pneumatic conveyor system 20. The nitrogen is fed from the lower portion as its density is slightly lower than the density of air such that nitrogen tends to rise. In different embodiments the container vessel 32 is filled with carbon dioxide fed into the container vessel 32 from above as its density is slightly higher than the density of air and thus sinks through the biocoal inside the container vessel 32. In some embodiments residual air or oxygen compounds cause limited combustion in the container vessel 32 resulting in increasing levels of carbon dioxide and consuming at least some of the residual air or oxygen compounds.

In various embodiments the bulk storage 30 comprises a cooling element. In further embodiments the cooling element is arranged to cool the inner wall of the container vessel 32. In further embodiments the cooling element cools the inert gas flushed through the container vessel 32.

In various embodiments the bulk storage 30 comprises a third airlock 31 configured to allow coal to pass from the separator 23, while impeding air exchange between the separator 23 and the container vessel 32. In some embodiments the third airlock 31 prevents that the fan 24 draws the inert gas from the container vessel 32 and thus maintains the inert gas atmosphere inside the container vessel 32. In some embodiments the third airlock 31 prevents that suction on the conveying channel 22 is decreased and maintains the pressure drop across the conveying channel 22 required for conveying the biocoal. In some embodiments an additional valve is arranged to shut down any fluid communication between the bulk storage 30 and the conveying channel 22, if it is determined that considerable amounts of fluid are sucked from the bulk storage 30 into the conveying channel 22.

In various embodiments the bulk storage 30 comprises a funnel shaped bottom portion 33 and a fourth airlock 34. In various embodiments the funnel shaped bottom portion 33 guides the biocoal towards the fourth airlock 34. In various embodiments portions of the biocoal are released from the container vessel 32 through the fourth airlock 34 once the temperature of the respective portion of the biocoal has sufficiently dropped. The fourth airlock 34 is arranged to allow biocoal to pass from the container vessel 32 to the outside of the container vessel 32 and the bulk storage 30, and to impede communicating fluid exchange between the container vessel 32 and ambient air.

In various embodiments the bulk storage 30 discharges the cooled biocoal towards a transport means 35. In various embodiments the transport means 35 is a conveyor belt, a conveying screw, or an open or closed container allowing for transport on a vehicle.

The biocoal thus is processed in the following way:
Biocoal produced by some process involving pyrolytic cracking of carbonaceous materials passes from a process chamber 1 to the cooling structure 10. In various embodiments the Biocoal passes through an airlock into the cooling structure 10. In various embodiments the biocoal passes into the first cooling chamber 11. In various embodiments the first cooling chamber 11 comprises a purging structure purging the biocoal with an inert gas. The inert gas may impede ignition of the biocoal and/or cool the biocoal. In various embodiments the first conveying screw 15 forwards the biocoal through the first cooling chamber 11. In various embodiments the first conveying screw 15 mixes the biocoal to expose different portions of the biocoal to the cooled inside wall of the first cooling chamber 11. The first conveying screw 15 supports cooling of the cooling of the biocoal.

In various embodiments the first cooling chamber 11 cools the surface of the biocoal to a temperature of below 100 °C to stop torrefaction, preferably below 40 °C. In various embodiments the residence time of the biocoal in the first cooling chamber 11 is adjusted to control the resulting temperature of the biocoal. In various embodiments the biocoal passes from the first cooling chamber 11 to the second cooling chamber 12 through the first airlock 13. In various embodiments the biocoal is gravity fed from the first cooling outlet 11b of the first cooling chamber 11 through the first airlock 13 and into the second cooling inlet 12a of the second cooling chamber 12.

In various embodiments the first cooling chamber 11 is filled between 40% and 60% with biocoal. This allows for an earlier contact of the biocoal with the cooling element of the first cooling chamber 11 than when the first cooling chamber 11 is almost entirely filled.

The second cooling chamber 12 further cools the biocoal. In various embodiments the second cooling chamber 12 comprises a purging structure purging the biocoal with an inert gas to cool the biocoal and/or impede ignition. In various embodiments the second conveying screw 16 forwards and/or mixes the biocoal in the second cooling chamber 12. In some embodiments the first and/or second conveying screws 15, 16 also move the biocoal upslope to allow gravity feeding through the first and/or second airlocks 13, 14 and into the second cooling inlet 12a and/or the inlet chute 21.

In various embodiments the second cooling chamber 12 cools the surface of the biocoal to a temperature of below 40 °C, preferably below 20 °C. In various embodiments the biocoal passes from the second cooling chamber 12 to the pneumatic conveyor system 20. In various embodiments the biocoal is gravity fed from the second cooling outlet 12b of the second cooling chamber 12 through the second airlock 14 into the inlet chute 21 of the pneumatic conveyor system 20.

In various embodiments the second cooling chamber 12 is filled more than 90% with biocoal. This maximizes residence time and cooling and thus occupancy rate of the second cooling chamber 12. In some embodiments the filling of the second cooling chamber 12 also impedes air passing from the inlet chute 21 into the first cooling chamber 11. In embodiments in which the process chamber 1 is maintained below atmospheric pressure to impede gas leakage to the outside and the first cooling chamber 11 is in fluid communication with the process chamber 1, entirely filling the second cooling chamber 12 with biocoal thus supports maintaining the pressure in the process chamber 1.

The pneumatic conveyor system 20 provides the airflow 25 from the airflow inlet 21a to the separator 23 and the fan 24 via the conveying channel 22. In various embodiments the biocoal is dropped from above into the airflow 25. As long as there is significant relative movement between the airflow 25 and the biocoal therein, the airflow 25 further cools the biocoal. The biocoal moves along the conveying channel 22 towards the separator 23. In the separator 23, the biocoal is removed from the airflow 25 such that the airflow passes towards the fan 24 and the biocoal passes to the bulk storage 30. In various embodiments, the biocoal passes the third airlock 31.

In various embodiments the container vessel 32 is arranged to prevent ignition of the biocoal, particularly by providing an inert atmosphere, e.g. by filling the container vessel 32 with an inert gas. In various embodiments the inert gas is nitrogen and is flushed into the container vessel 32 from a position close to the bottom. The nitrogen rises through the container vessel 32 and the biocoal contained therein, and drives out any residual air or oxygen compounds. In different embodiments the inert gas is carbon dioxide and is flushed into the container vessel 32 from a position close to the top. The carbon dioxide sinks through the container vessel 32 and the biocoal contained therein, and drives out any residual air or oxygen compounds. In various embodiments the inert gas supports cooling of the biocoal. In various embodiments the container vessel 32 cools the biocoal therein to a temperature preventing ignition even when permanently stored in ambient air.

In various embodiments the biocoal passes into the container vessel 32. The biocoal remains in the container vessel 32 at least until the remaining heat is insufficient to ignite the biocoal even in an atmosphere of ambient air. Once the biocoal is sufficiently cooled, the biocoal is discharged to the outside of the container vessel 32. The cooled biocoal is allowed to permanently contact ambient air. In various embodiments the biocoal is discharged towards a transport means 35.

In various embodiments the biocoal is transferred to a power plant for energy or heat production. In further embodiments the biocoal is used to store carbon and/or to upgrade soil.

In various embodiments the cooling structure 10 comprises a single cooling chamber and a single airlock between the process chamber 1 and the inlet chute 21. The single cooling chamber is arranged to cool the biocoal to a temperature below 20 °C. For example, the length of the cooling chamber is selected accordingly. However, while a design with a single cooling chamber is generally simpler, a design with two cooling chambers and an airlock between them better allows controlling the resulting temperature of the biocoal and impeding air passage into the process chamber 1.

While this description of the inventive process refers to some biocoal at specific process steps, please note that in various embodiments the handling apparatus is operated continuously such that biocoal is present at different stages of the handling apparatus at the same time. While this description primarily refers to biocoal, also different types of coal produced according to conventional processes may be handled in the apparatus according to the invention.

## Claims

1. An apparatus for handling coal, comprising
- a cooling structure arranged to receive hot coal from a process chamber and to cool the coal in an atmosphere impeding ignition; and
- a pneumatic conveyor system arranged to move coal by air pressure;
wherein the cooling structure is configured to cool the coal to a surface temperature allowing the pneumatic conveyor system to convey the coal across a predetermined distance without the coal igniting.

2. The apparatus of claim 1, further comprising a gas lock arranged to allow coal to pass from the cooling structure into the pneumatic conveyor system and to impede communicating fluid exchange between the cooling structure and the pneumatic conveyor system, the gas lock preferably being a second rotary airlock.

3. The apparatus of any one of the preceding claims, further comprising at least one screw conveyor arranged to move coal through the cooling structure.

4. The apparatus of any one of the preceding claims, wherein the cooling structure comprises a cooling outlet and the pneumatic conveyor system comprises a conveyor inlet wherein the cooling outlet is arranged above the conveyor inlet such that gravity causes coal to drop from the cooling outlet into the conveyor inlet, the conveyor inlet preferably being an inlet chute.

5. The apparatus of any one of the preceding claims, wherein the cooling structure comprises a first cooling chamber in fluid communication with the process chamber and a second cooling chamber arranged to receive coal from the first cooling chamber, wherein communicating fluid exchange between the second cooling chamber and the first cooling chamber as well as the process chamber is impeded.

6. The apparatus of claim 4, wherein a first gas lock is arranged between the first cooling chamber and the second cooling chamber, the first gas lock preferably being a first rotary airlock.

7. The apparatus of any one of the preceding claims, wherein the pneumatic conveyor system comprises a conveying channel configured to have coal conveyed along, and the pneumatic conveyor system further comprises a fan configured to move air through the conveying channel, the fan being arranged adjacent to an end of the conveying channel.

8. The apparatus of any one of the preceding claims, further comprising a bulk storage arranged to receive the coal from the pneumatic conveyor system and to cool the coal, preferably in an atmosphere impeding combustion.

9. The apparatus of claim 8 wherein the pneumatic conveyor system further comprises a separator configured to discharge the coal into the bulk storage, the separator preferably being a cyclone separator.

10. A method for handling hot coal, comprising
- receiving coal from a process chamber and cooling the coal in an atmosphere impeding ignition; and
- conveying the coal by air pressure;
wherein the coal is cooled to a surface temperature allowing conveying the coal by air pressure across a predetermined distance without the coal igniting.

11. The method of claim 10, further comprising conveying the coal by air pressure and then cooling the coal in an atmosphere impeding ignition until remaining thermal energy is insufficient to ignite the coal in an atmosphere containing oxygen.

12. The method of any one of claims 10 or 11, further comprising impeding fluid communication between the atmosphere impeding ignition and the air for conveying the coal.

13. The method of any one of claims 10 to 12, further comprising processing biomass to coal in the process chamber, wherein a main fraction of biomass particles, particularly 75% by weight of the biomass particles, preferably has a cross-section of between 3 mm and 16 mm.

14. The method of claim 13, wherein particles smaller than a cross-section of 3 mm make up less than 12% by weight of the biomass, and particles with a cross-section larger than 16 mm make up less than 3% of the biomass.
